Europäisches Patentamt

(19) **European Patent Office**

Office européen des brevets

(11) Numéro de publication: **0 0 1 2 678**
**B1**

(12) **FASCICULE DE BREVET EUROPEEN**

(45) Date de publication du fascicule du brevet:
**19.01.83**

(21) Numéro de dépôt: **79400981.1**

(22) Date de dépôt: **06.12.79**

(51) Int. Cl.³: **F 24 J 3/02**

(54) **Capteur solaire.**

(30) Priorité: **08.12.78 FR 7834553**

(43) Date de publication de la demande:
**25.06.80 Bulletin 80/13**

(45) Mention de la délivrance du brevet:
**19.01.83 Bulletin 83/3**

(84) Etats contractants désignés:
**DE FR**

(56) Documents cités:
**DE-A-2 518 926**
**DE-A-2 530 152**
**FR-A-2 237 310**
**FR-A-2 308 883**
**FR-A-2 349 802**
**US-A-3 998 204**

(73) Titulaire: **BERTIN & CIE, Boîte Postale No. 3,
F-78370 Plaisir (FR)**

(72) Inventeur: **Boy-Marcotte, Jean-Louis, Résidence
Chevreuse 34, Avenue St-Laurent, F-91400 Orsay (FR)**
Inventeur: **Junot, Henri Denis Marie, 49, rue
Vercingétorix, F-75014 Paris (FR)**
Inventeur: **Grossin, Richard Jacques Albert Maurice,
28, rue Baudin, F-92500 Rueil-Malmaison (FR)**
Inventeur: **Chevalier, Philippe Jacques Marie René, 2ter,
rue St-Michel, F-78890 Garancieres (FR)**

(74) Mandataire: **De Boisse, Louis, 37, Avenue Franklin D.
Roosevelt, F-75008 Paris (FR)**

BUNDESDRUCKEREI BERLIN

Capteur solaire

La présente invention concerne un capteur solaire destiné à convertir un rayonnement solaire en chaleur et à transmettre la chaleur ainsi recueillie vers une utilisation, et plus particulièrement un capteur d'énergie solaire du type à absorbeur plan.

Un capteur de ce type, décrit dans DE-A-2 530 152, comprend une plaque receptrice suspendue, par une attache légère de faible conductibilité calorifique, dans une enceinte sous vide constituée de deux coquilles à jonction périphérique, le montage de la plaque réceptrice étant tel que sa face antérieure soit exposée au rayonnement solaire traversant la fenêtre que forme la coquille antérieure, sans pont thermique notable entre la plaque réceptrice et la paroi de l'enceinte à laquelle elle est suspendue, la face antérieure de la plaque réceptrice étant traitée de façon à avoir les propriétés optiques sélectives de bonne absorption au rayonnement solaire et de moindre émission infrarouge, comme décrit d'ailleurs dans FR-A-2 349 802.

La présente invention propose des perfectionnements à ce type de capteur, et en particulier dans le but d'obtenir, à l'intérieur de la chambre, un vide poussé et durable qui supprime toute perte par conduction gazeuse.

En effet, dans de tels types de capteurs, la fenêtre et le fond sont réalisés dans des matériaux différents, transparents pour la fenêtre et opaques pour le fond, et leur liaison pose des problèmes techniques d'étanchéité. Pour pallier cette difficulté, les seuls capteurs solaires vous vide actuellement réalisés, sont constitués d'une enceinte tubulaire comme décrit dans FR-A-2 349 802, ce qui limite la surface unitaire de capteur, et pose des problèmes de fragilité.

Suivant une première caractéristique de l'invention, les coquilles étant toutes deux en verre, leur jonction périphérique est un scellement continu exécuté sur toute la longueur de la périphérie au moyen d'une pâte de verre en état de surfusion selon la technique courante utilisée dans la fabrication des tubes de télévision (voir par exemple FR-A-2 237 310), de sorte que l'enceinte, exclusivement formée de verre y compris au niveau de la soudure intercoquille, est adaptée à la préservation durable en son sein d'un vide poussé ou vide dit secondaire.

Suivant une seconde caractéristique de l'invention, entre la plaque réceptrice et la coquille de verre postérieure, s'étendent un ou plusieurs écrans radiatifs en feuille métallique, à faible émissivité infrarouge, à proximité et plus ou moins parallèlement à la face postérieure de la plaque réceptrice non exposée au rayonnement solaire, afin de réduire les pertes par rayonnement de celle-ci, cet écran radiatif étant supporté par la plaque réceptrice à l'écart de la paroi de la coquille de verre postérieure.

Ces écrans peuvent être par exemple de minces tôles d'acier inoxydable, d'aluminium ou de cuivre, ou des feuilles de plastique aluminisé.

Le nombre d'écrans nécessaires est faible (1 à 4 suivant leur émissivité), et leur géométrie est étudiée de façon à limiter les effets de bord (pertes par rayonnement latéral), avantageusement en relevant les extrémités des écrans jusqu'à ce que l'espace laissé entre l'absorbeur et le premier écran, ou entre deux écrans successifs, soit très faible.

Lorsque la section du capteur est sensiblement rectangulaire, on peut réaliser une combinaison de capteurs juxtaposés sans perte de place.

Suivant une variante de l'invention, chaque coquille de verre est constituée d'une dalle monobloc formée d'une multiplicité d'éléments en voûtes juxtaposés solidaires les uns des autres et répartis en damier, les deux dalles de verre opposées étant jointes l'une à l'autre par un scellement à base de verre s'étendant sur tout leur périphérie.

Selon une troisième caractéristique de l'invention, les moyens pour collecter et pour transporter la chaleur recueillie, sont disposés sur la face dur récepteur non exposée au soleil. Ils sont constitués de tubes en serpentin aménagés dans chaque chambre reliés en série ou en parallèle et dont les conduits d'entrée et de sortie traversent le sommet ou culot du cône.

Lorsque l'enceinte est constituée de plusieurs chambres contiguës selon le deuxième mode de réalisation les différents serpentins sont reliés les uns à la suite des autres grâce à des raccords logés dans des passages aménagés dans les cloisons intermédiaires.

Dans cette réalisation, de préférence, on ne prévoit qu'un conduit d'entrée et qu'un conduit de sortie aménagés dans le culot du seul cône de l'enceinte.

Suivant l'invention, on crée un vide poussé (vide dit secondaire de l'ordre de $10^{-4}$ Torr qui se maintient dans le temps) à l'intérieur de la chambre dans laquelle est aménagé le récepteur, de façon à annuler complètement, non seulement les pertes par convection mais aussi les pertes par conduction gazeuse.

Une soudure verre-métal est faite au niveau du culot pour isoler la chambre de l'ambiance, comme il est bien connu de le faire en technique du vide. Le vide est réalisé en adaptant un appareil déprimogène sur un embout appelé »queusot«. L'utilisation d'un »getter« permet d'absorber les molécules de gaz résiduel, avant la fermeture de l'enceinte.

Le récepteur et les écrans sont maintenus par une structure légère, peu conductrice, qui limite les effects de »pont thermique«. Ce peut être par exemple une suspension latérale sur les bords de la chambre, grâce à un système de tubes ou de tiges en acier inoxydable, ou de fils souples en acier, en composite de résine et fibre de verre, ou tout autre produit.

Le mode de réalisation, en particulier, celui de la deuxième variante permet de constituer des capteurs solaires de grandes dimensions qui présentent le les avantages suivants:

— pas de pertes dans des raccords intermédiaires,
— économie de matière,
— gain de temps à la fabrication: la soudure verre-verre, la soudure verre-métal et la mise sous vide sont effectuées une seule fois pour un capteur à plusieurs chambres.

Le type de capteur présenté permet en un site conné de récupérer de l'ordre de deux fois plus d'énergie annuelle qu'un capteur plan classique, avec un coût similaire pour une production en série.

La description qui va suivre, en regard des dessins annexés, donnés à titre d'exemple non limitatif, fera bien comprendre comment l'invention peut être réalisée.

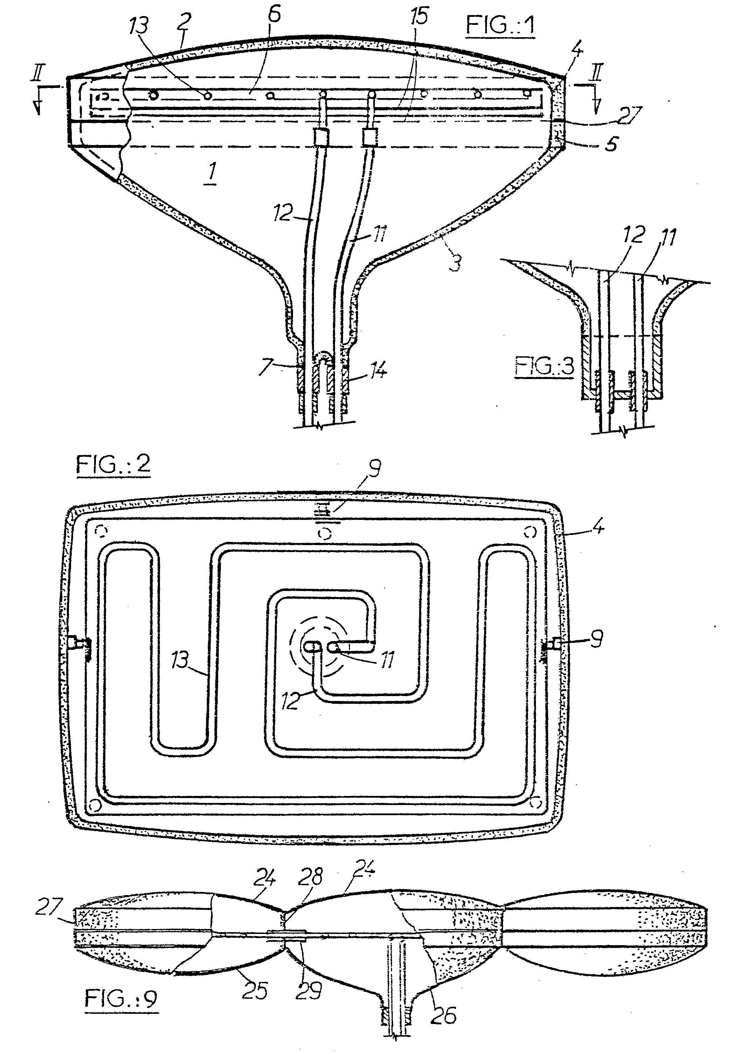

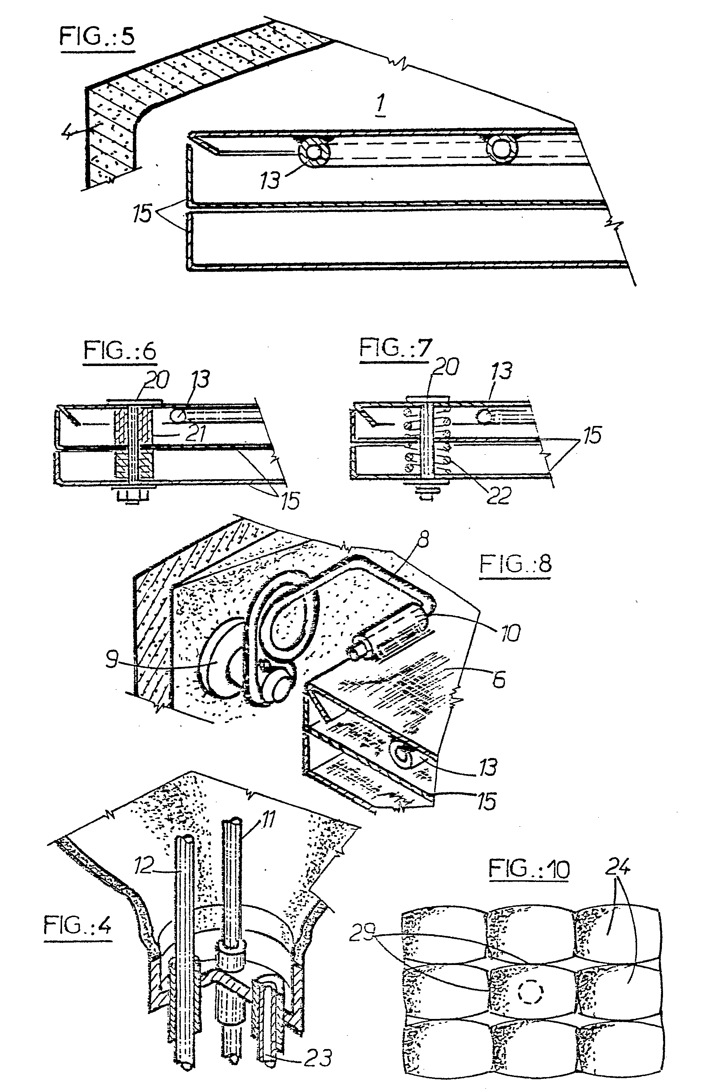

La figure 1 est une vue en coupe longitudinale d'un premier mode de réalisation selon l'invention; la figure 2 est une vue en coupe suivant II-II de la figure 1; les figures 3 et 4 sont des vues en coupe à plus échelle de variantes de culot du cône; la figure 5 est une vue en coupe, d'un agrandissement de la figure 1; les figures 6, 7 et 8 sont des vues illustrant la fixation du récepteur et des écrans; la figure 9 est une vue partiellement en coupe d'un second mode de réalisation de l'invention; la figure 10 illustre un exemple de disposition du second mode de réalisation.

En regard des figures 1 et 2 on peut voir un premier mode de réalisation d'un capteur solaire suivant l'invention. Ce capteur solaire comporte une chambre 1 comprenant une fenêtre exposée au soleil et un fond. La fenêtre est constituée d'une voûte 2 transparente légèrement cambrée et le fond, d'un cône 3 ouvert à son sommet 7. Suivant l'invention, la voûte et le cône sont en verre et se prolongent chacun par un élément 4 et 5 sensiblement cylindrique de même diamètre. Ces éléments sont disposés l'un en regard de l'autre et réunis par un scellement continu 27 sur toute la périphérie. Ce scellement, connu en soi par les fabricants de tubes de télévision, est effectué au moyen d'un verre en état de surfusion à une température de l'ordre de 400°C. Il est possible de faire un tel scellement sur une grande largeur et avec une excellente étanchéité car les deux composants de la chambre sont en verre. On réalise ainsi des chambres présentant une surface de captation du rayonnement solaire appréciable compte tenu de leur épaisseur.

A l'intérieur de la chambre, on trouve les moyens pour absorber l'énergie thermique et les moyens pour collecter et pour transporter cette énergie. Bien entendu les moyens sont installés dans la chambre avant que ne soit effectué le scellement décrit précédemment.

Les moyens pour absorber le rayonnement solaire sont constitués par un récepteur plan formé d'une plaque métallique 6, en cuivre ou aluminium de faible épaisseur. Cette plaque peut être traitée, comme cela a déjà été dit, par exemple, par un dépôt sur la face exposée au soleil, de noir de chrome. Cette plaque est fixée à la chambre et, en l'espèce, suspendue à l'élément 4 de la voûte par une structure légère, peu conductrice, qui limite les effets de »pont thermique«.

Cette structure, voir figure 8, comporte une tige 8 spiralée, pour avoir un effet de suspension, accrochée à un ergot 9 solidaire de la voûte et solidaire de la plaque 6 par un fourreau 10. En variante, elle pourrait comporter une tige en inox accrochée à l'ergot 9, et vissée sur le dernier écran radiatif.

Les moyens pour collecter et pour transporter la chaleur recueillie, sont disposés sur la face du récepteur, non exposée au soleil. Ils sont constitués d'un tube d'arrivée 11 et de sortie 12 réunis, par un tube 13 en forme de serpentin, ce dernier étant fixé par brasure ou soudure de façon à commencer et finir à proximité du centre de la plaque 6 (voir figure 2).

Les tubes 11 et 12 pénètrent dans la chambre par le sommet 7 ou culot ouvert du cône. L'étanchéité est assurée par une soudure verre-métal 14 effectuée au niveau du culot, (figures 3 et 4).

Pour limiter les pertes par rayonnement face arrière du récepteur, on dispose un système d'écrans radiatifs, constitué de feuilles métalliques 15 ayant une faible émissivité dans l'infrarouge. Ces écrans peuvent être au nombre de deux (figure 1) ou plus généralement de un à quatre. Les bords des écrans sont relevés pour limiter les effets de bord (pertes par rayonnement latéral).

Les écrans radiatifs sont maintenus entre eux et à la plaque par des tiges filetées à leurs extrémités 20 et espacés grâce à des entretoises 21 (figure 6) ou des ressorts 22 (figure 7) insérées entre lesdits éléments.

Le vide, de l'ordre de $10^{-4}$ Torr, qui se maintient dans le temps à l'intérieur de la chambre est réalisé en appliquant un appareil déprimogène au culot du cône sur l'embout 23 (figure 4), tout en étuvant le capteur à une température de l'ordre de 350°C, pour faire dégazer les surfaces. Lorsque la pression souhaitée est atteinte, on obture cet embout 23 par une soudure.

Suivant un deuxième mode de réalisation de l'invention (voir figures 9 et 10), on associe une pluralité de chambres contiguës communiquant. La fenêtre est formée de voûtes 24 en verre solidaires les unes avec les autres. De même, le fond est réalisé par des voûtes 25 sensiblement identiques aux voûtes 24, mais en remplaçant l'une des voûtes 25 par un cône 26 de même hauteur que le cône du mode de réalisation précédent. Une soudure unique 27 périphérique est pratiquée pour rendre étanche l'enceinte.

Des cloisons intermédiaires 28, en appui deux à deux sont incorporées pour supporter la dépression qui règne à l'intérieur de l'enceinte.

Seul un passage aménagé dans les cloisons 28 est prévu pour loger les raccords 29 reliant les uns à la suite des autres les différents serpentins analogues à ceux dérits précédemment. Ces serpentins peuvent être reliés soit en série, soit en parallèle.

L'entrée et la sortie se fait par le culot du cône unique prévu pour une enceinte. Ce cône peut être par exemple au centre d'une disposition telle que représentée (figure 10), où l'on trouve huit chambres périphériques et la chambre centrale assurant le passage des conduits d'entrée et de sortie.

## Revendications

1. Capteur d'énergie solaire du type à absorbeur plan formé d'une plaque réceptrice (6) suspendue, par une attache légère de faible conductibilité calorifique (8), dans une enceinte sous vide (1) constituée de deux coquilles de verre (2, 3) à jonction périphérique, le montage de la plaque réceptrice (6) étant tel que sa face antérieure soit exposée au rayonnement solaire traversant la fenêtre que forme la coquille de verre antérieure (2), sans pont thermique notable entre ladite plaque réceptrice (6) et la paroi de l'enceinte (1) à laquelle elle est suspendue, ladite face antérieure de la plaque réceptrice (6) étant traitée de façon à avoir les propriétés optiques sélectives de bonne absorption au rayonnement solaire et de moindre émission infragouge, et la plaque réceptrice (6) est pourvue de moyens permettant d'évacuer la chaleur absorbée vers l'extérieur du capteur par des conduits d'entrée (11) et de sortie (12) de fluide, caractérisé en ce que:

(a) ladite jonction périphérique des deux coquilles de verre (2, 3) est un scellement continu (27) exécuté sur toute la longueur de la périphérie au moyen d'une pâte de verre en état de surfusion selon la technique courante utilisée dans la fabrication des tubes de télévision, de sorte que l'enceinte (1), exclusivement formée de verre y compris au niveau de la soudure intercoquille (27), est adaptée à la préservation durable en son sein d'un vide poussé ou vide dit secondaire;

(b) entre ladite plaque réceptrice (6) et ladite coquille de verre postérieure (3) s'étendent un ou plusieurs écrans radiatifs en feuille métallique (15) à faible émissivité infrarouge, à proximité et plus ou moins parallèlement à la face postérieure de ladite plaque réceptrice (6) non exposée au rayonnement solaire, afin de réduire les pertes par rayonnement de celle-ci, ledit écran radiatif (15) étant supporté par ladite plaque réceptrice (6) à l'écart de la paroi de ladite coquille de verre postérieure (3).

2. Capteur d'énergie solaire selon la revendication 1, caractérisé en ce que le ou les écrans radiatifs (15) sont supportés mécaniquement par ladite plaque réceptrice (6), de sorte que tout l'ensemble constitué par cette dernière et le ou les écrans radiatifs (15) est suspendu dans l'enceinte (1) par ladite suspension légère de faible conductibilité calorifique (8).

3. Capteur d'énergie solaire selon la revendication 2, caratérisé en ce que le ou les écrans radiatifs (15) présentent des bords relevés formant entretoises et destinés à ne laisser qu'un jeu très étroit entre ladite plaque réceptrice (6) et le ou lesdits écrans radiatifs (15).

4. Capteur d'énergie solaire selon la revendication 1, 2 ou 3, caractérisé en ce que la coquille de verre postérieure (3) présente une partie d'allure conique qui va en se rétrécissant à l'opposé de ladite coquille antérieure formant fenêtre (2), pour se terminer par un culot (7).

5. Capteur d'énergie solaire selon la revendication 4, caractérisé en ce que les conduits métalliques d'entrée (11) et de sortie (12) traversent de façon hermétique ladite coquille postérieure (3) à proximité de son colot (7), cette traversée se faisant au moyen d'une soudure verre/métal (14) d'étanchéisation de ladite enceinte (1).

6. Capteur d'énergie solaire selon la revendication 5, caractérisé en ce que ladite coquille de verre postérieure (3) est en outre traversée de façon hermétique par un embout ou queusot (23), à proximité de la canalisation (11, 12), pour la mise sous vide poussé de l'enceinte (1), un »getter« étant introduit dans celle-ci pour absorber les molécules de gaz résiduel qui peuvent subsister.

7. Capteur d'énergie solaire selon l'une quelconque des revendications précédentes, caràctérisé en ce que chaque coquille de verre (24, 25) est constituée d'une dalle de verre monobloc formée d'une multiplicité d'éléments en voûtes juxtaposés solidaires les uns des autres et répartis en damier, les deux dalles de verre opposées (24, 25) étant jointes l'une à l'autres par un scellement à base de verre s'étendant sur toute leur périphérie (27).

8. Capteur d'énergie solaire selon la revendication 7, caractérisé en ce que les cloisons d'appui intermédiaires (28) sont interposées entre la dalle de verre antérieure (24) et la dalle de verre postérieure (25) pour renforcer l'enceinte.

## Patentansprüche

1. Sammler zum Auffangen von Sonnenenergie mit einem ebenen Absorber, der aus einer Sammelplatte (6) besteht, die mittels einer leichten Befestigung (8) von geringer Wärmeleitfähigkeit in einer evakuierten Kammer (1) aufgehängt ist, die aus zwei an ihrem Umfang miteinander verbundenen Glasschalen (2, 3) besteht, wobei die Sammelplatte (6) so montiert ist, daß ihre vordere Fläche der Sonnenstrahlung ausgesetzt ist, die das von der vorderen Glasschale (2) gebildete Fenster durchdringt und wobei zwischen der Sammelplatte (6) und der Wand der Kammer (1), in der die Sammelplatte (6) abgestützt ist, eine nennenswerte wärmeleitende Brücke nicht vorhanden ist und wobei die vordere Fläche der Sammelplatte (6) derart behandelt ist, daß sie die selektiven optischen Eigenschaften einer guten Absorption der Sonnenstrahlung und einer niedrigen infraroten Emission aufweist und wobei die Sammelplatte (6) mit Mitteln zum Abführen der absorbierten Wärme aus dem Sammler über eine Eintrittsleitung (11) und eine Austrittsleitung (12) für Flüssigkeit ausgerüstet ist, gekennzeichnet durch die nachgenannten Merkmale:

(a) die Verbindung am Umfang der beiden Glasschalen (2, 3) ist eine sich über die gesamte Länge des Umfanges erstreckende zusammenhängende Verkittung (27), die mittels einer unterkühlten Glaspaste nach der bei der Fabrikation von Fernsehrohren üblichen Methode ausgeführt ist, so daß die Kammer (1), die einschließlich der Naht (27) im Bereich zwischen den Glasschalen (2, 3) ausschließlich aus Glas besteht, dazu geeignet ist, in ihrem Inneren ein dauerhaftes Hochvakuum zu halten;

(b) zwischen der Sammelplatte (6) und der hinteren Glasschale (3) erstrecken sich ein oder mehrere reflektierende Schirme (15) aus Metallfolien mit geringer Infrarot-Emission, die nahe bei und mehr oder weniger parallel zu der der Sonnenstrahlung nicht ausgesetzten Rückseite der Sammelplatte (6) angeordnet sind, um die Verluste durch Abstrahlung von der Sammelplatte (6) zu reduzieren, wobei der reflektierende Schirm (15) von der Sammelplatte (6) im Abstand von der Wand der hinteren Glasschale (3) abgestützt ist.

2. Sammler zum Auffangen von Sonnenenergie nach Anspruch 1, dadurch gekennzeichnet, daß der oder die reflektierenden Schirme (15) durch die Sammelplatte (6) mechanisch abgestützt sind, so daß die Gesamtheit aus der Sammelplatte (6) und dem oder den reflektierenden Schirmen (15) in der Kammer (1) durch die genannte leichte Befestigung (81 mit geringer Wärmeleitfhähigkeit aufgehängt ist.

3. Sammler zum Auffangen von Sonnenenergie, dadurch gekennzeichnet, daß der oder die reflektierenden Schirme (15) aufgebogene Ränder aufweisen, die Stege bilden und dazu dienen, zwischen der Sammelplatte (6) und dem oder den reflektierenden Schirmen (15) einen nur sehr engen Spalt frei zu lassen.

4. Sammler zum Auffangen von Sonnenenergie nach Anspruch 1, 2 oder 3, dadurch gekennzeichnet, daß die hintere Glasschale (3) einen kegelförmigen Teil aufweist, der sich im Gegensatz zu der vorderen, das Fenster bildenden Glasschale (2) verjüngt und mit einem Sockel (7) endet.

5. Sammler zum Auffangen von Sonnenenergie nach Anspruch 4, dadurch gekennzeichnet, daß die aus Metall bestehenden Leitungen (11, 12) für den Eintritt und für den Austritt die hintere Glasschale (3) in der Nähe ihres Sockels (7) hermetisch durchdringen, wobei an der Durchdringungsstelle eine Glas/Metall-Verschweißung (14) zur Abdichtung der Kammer (1) vorgesehen ist.

6. Sammler zum Auffangen von Sonnenenergie nach Anspruch 5, dadurch gekennzeichnet, daß die hintere Glasschale (3) in der Nähe der Leitungen (11, 12) außerdem von einem Evakuierungsröhrchen (23) hermetisch durchgriffen ist, und daß, um die Kammer (1) unter ein Hochvakuum zu bringen, in diese ein Getter eingeführt wird, um dort noch vorhandene restliche Gasmoleküle zu absorbieren.

7. Sammler zum Auffangen von Sonnenenergie nach einem der vorhergehenden Ansprüche, dadurch gekennzeichnet, daß jede Glasschale (24, 25) durch eine zusammenhängende einstückige Glasplatte gebildet ist, die mehrere gewölbte nebeneinander liegende und fest miteinander verbundene schachbrettartig angeordnete Elemente aufweist, wobei die beiden einander gegenüberliegenden Glasplatten (24, 25) durch eine Verkittung (27) auf der Basis von Glas miteinander verbunden sind, die sich über den gesamten Umfang der Platten erstreckt.

8. Sammler zum Auffangen von Sonnenenergie nach Anspruch 7, dadurch gekennzeichnet, daß zwischen die vordere Glasplatte (24) und die hintere Glasplatte (25) Zwischen-Stützwände (28) eingefügt sind, um die Kammer (1) zu versteifen.

## Claims

1. Solar energy collector of the flat absorber type formed of a receiver plate (6) suspended, by a light, low heat conductive fastener (8), in a vacuum enclosure (1) made of two peripheral-junction glass shells (2, 3), the mounting of the receiver plate (6) being such that its front face is exposed to solar radiation across the window formed by the front glass shell (2), without notable thermal bridge between said receiving plate (6) and the wall of the enclosure (1) to which it is suspended, said front face of the receiving plate (6) being processed so as to exhibit the selctive optical properties of good solar radiation adsorption and poor infrared emission, and the receiver plate (6) being provided with means allowing evacuation of the absorbed heat outside the collector through fluid inlet (11) and outlet (12) ducts, characterised in that:

(a) said peripheral junction of the two glass shells (2, 3) is a continuous seal (27) applied all along the periphery by means of a glass paste in superfusion state according to the current technique used in the manufacture of television tubes, whereby the enclosure (1) which is exclusively formed of glass including along the inter-shell weld (27), is adapted for the lasting maintenance inside it of a high vacuum or so-called secondary vacuum;

(b) between said receiving plate (6) and said rear glass shell (3), one or more radiating screens of low infrared emissivity metal sheet (15) extend adjacent and more or less parallel to the rear face of said receiver plate (6) which is not exposed to solar radiation, in order to reduce its radiation losses, said radiating screen (15) being supported by said receiving plate (6) spaced away from the wall of said rear glass shell (3).

2. Solar energy collector according to claim 1, characterised in that the radiating screen or screens (15) are mechanically supported by said receiving plate (6), whereby the whole assembly formed by the latter and the radiating screen or screens (15) is suspended in the enclosure (1) by means of said light, low heat conductive suspension (8).

3. Solar energy collector according to claim 2, characterised in that the radiating screen or screens (15) present upraised edges forming spacers and designed for leaving only a very narrow clearence between said receiver plate (6) and said radiating screen or screens (15).

4. Solar energy collector according to claim 1, 2 or 3, characterised in that the rear glass shell (3) has a generally conical portion which tapers away from said window forming front shell (2), to end with a base (7).

5. Solar energy collector according to claim 4, characterised in that the inlet and outlet metal ducts (11, 12) sealingly cross said rear shell (3) adjacent its base (7), this crossing being effected by means of a glass/metal weld (14) sealing said enclosure (1).

6. Solar energy collector according to claim 5, characterised in that said rear glass shell (3) is further sealingly crossed by a nipple or stub (23), adjacent the ducting (11, 12), for bringing the enclosure (1) under high vacuum, a getter being introduced into the latter for absorbing residual gas molecules which may still exist in it.

7. Solar energy collector according to anyone of the preceding claims, characterised in that each glass shell (24, 25) is made of a single-piece glass slab formed of a multiplicity of juxtaposed dome-shaped elements integral with each other and in check pattern, the two opposite glass slabs (24, 25) being joined to one another by a glass-based seal extending all along their periphery (27).

8. Solar energy collector according to claim 7, characterised in that intermediate backing partitions (28) are interposed between the front glass slab (24) and the rear glass slab (25) in order to strengthen the enclosure.

FIG.:1

FIG.:3

FIG.:2

FIG.:9

FIG.:5

0 012 678

FIG.:6

FIG.:7

FIG.:8

FIG.:4

FIG.:10